# EUROPEAN PATENT SPECIFICATION

(11) **EP 2 824 432 B1**
(45) Date of publication and mention of the grant of the patent: **10.01.2018**
(21) Application number: 14181816.1
(22) Date of filing: 21.08.2014
(51) Int. Cl.: G01F 5/00, G01F 15/14, G01F 15/18, G01F 7/00, G01F 15/00

(54) **Housing for flow measurements**
Gehäuse für Strömungsmessungen
Boîtier pour les mesures d'écoulement

(43) Date of publication of application: 14.01.2015
(73) Proprietor: Sensirion AG, 8712 Stäfa (CH)
(72) Inventor: Bächlin, Marc, 8712 Stäfa (CH); Hornung, Mark, 8712 Stäfa (CH)
(74) Representative: Detken, Andreas

(56) References cited:
- EP-A1- 0 670 034
- WO-A1-82/04120
- US-A- 4 653 321
- US-A1- 2012 260 727

## Description

### TECHNICAL FIELD

The present invention relates to a housing for a flow rate measurement, to a separation box, and to a flow sensor device, in particular a gas meter, with such a housing or such a separation box.

### PRIOR ART

Flow tubes are commonly used for measuring a flow rate of a fluid such as a gas or a liquid. Such flow tubes are known, e.g. from WO 2012/021999 A1, and may comprise a main channel and a bypass channel, the latter branching off and rejoining at a downstream position to the main channel. A part of the fluid conveyed through the flow tube is guided through the bypass channel. The bypass flow rate is normally considerably lower than the main flow rate and therefore easier to determine. In the bypass channel there is arranged a flow sensor for accurately measuring the bypass flow rate. The main flow rate is then determined from the measured bypass flow rate by way of geometrical considerations.

The geometry of the flow tube limits the range of fluid flow rates that may be measured. There is a need for measuring flow rates in a broad range, and accordingly, a plurality of flow tube type designs has been developed. Some of these designs are usable for measuring low flow rates, others for measuring high flow rates. Each flow tube must, however, be carefully calibrated and needs to comply with certain standards; this requires significant effort (*e.g.* as regards design, fabrication tools, calibrations tests, ...).

EP 0 670 034 A1 shows a partition in a main pipe the partition having a plurality of through opening fitted with flow tubes.

US 2012/260727 shows a diesel particulate filter with an inlet, an outlet and a filter media therebetween divided into multiple channels.

US 4,653,321 A teaches a method providing at least two fluid flow channels of different sizes.

WO 82/04120 A1 shows a flow spitting device for splitting a main stream into a sensing stream and a further stream, wherein a volume flow of the sensing stream is measured with a sensor device.

### SUMMARY OF THE INVENTION

It is therefore an object of the present invention to increase a flow range measurable with a flow tube.

This object is achieved by a housing with the features of claim 1. Accordingly, in a first aspect, the present invention provides a housing that defines a substantially fluid-tight flow chamber for measurement of a fluid flow rate. The housing comprises a main fluid inlet for a fluid flow into the flow chamber, a main fluid outlet for the fluid flow out of the flow chamber, and a separation wall. The separation wall is arranged in the flow chamber and the separation wall separates the main fluid inlet from the main fluid outlet. Accordingly, the separation wall divides the flow chamber into a main flow inlet side and a main flow outlet side. The separation wall comprises a plurality of receptions, each reception being configured to receive at least one flow sensor or a flow tube with or without flow sensor, and each reception comprising at least one through-opening such that each through-opening or each received flow tube fluidly connects the main fluid inlet side to the main fluid outlet side wherein the separation wall forms part of a substantially fluid-tight separation box, wherein said separation box is arranged within the flow chamber and defines a separation box chamber, wherein each of said receptions in said separation wall is configured to fluidly connect the flow chamber to the separation box chamber, and wherein the separation box comprises a connection structure for fluidly connecting the separation box chamber to the main flow outlet or the main fluid inlet.

In some embodiments the separation wall and each reception therein are configured such that each through-opening or each received flow tube fluidly connects the main fluid inlet side to the main fluid outlet side such that the fluid flow is conveyed substantially exclusively through the through-opening(s) and/or received flow tube(s). Accordingly, in some embodiments, the separation wall separates the main fluid inlet side and the main fluid outlet side such that the fluid flow is conveyed substantially exclusively through the receptions and/or flow tubes.

The term "substantially exclusively" is to be understood that only a minor leakage flow (*cf.* below) is conveyed to the main fluid outlet through other passages than the ones provided by the receptions or by the installed flow tubes. Accordingly, the separation wall separates the main fluid inlet from the main fluid outlet in a substantially fluid-tight manner except for the passages through the receptions or flow tubes.

In some embodiments, however, there is provided at least one further flow opening between the main flow inlet and the main flow outlet such that the above mentioned leakage flow is substantial, *i. e.* 0.5 to 5 times the flow through a through-opening or a flow tube, in a controllable manner. Such an additional flow channel may be provided by at least one further opening in the separation wall which is not related to the reception. It is, however, important that the additional flow through the further flow channel is known and therefore does not have to be measured separately. Accordingly, in some embodiments, at least one further flow channel may be provided between the main flow inlet and the main flow outlet, said further flow channel not being associated with the receptions. This is advantageous as the measurable flow range may be shifted (as opposed to being broadened by the receptions). It is therefore within the scope of the present invention to broaden and optionally also to shift the flow range.

In some embodiments, the additional flow channel may be provided by receptions that do not receive any flow tube and that are not covered.

The present invention allows extending the measurable flow range to multiples of the flow range that would be measurable by a single flow tube, without changing the flow tube design. Furthermore, the range may be additionally or alternatively shifted by providing an additional flow channel as described above.

The term "housing" refers to a casing or enclosure for a mechanical part, *e.g.* the flow tube set. Preferably, said housing may have a substantially cuboidal shape.

The term "fluid" refers to any substance that may be conveyed in a flow such as gases or liquids.

The term "substantially fluid tight" denotes that the respective structure exhibits as little leakage that a useful measurement with a typically leakage rate of less than 5%, preferably less than 1%, more preferably less than 0.5% and most preferably less than 0.1% of the measured flow rate is possible.

The term "reception" refers to a structure for receiving a flow sensor or a flow tube, wherein the reception is designed such as to allow a fluid communication between the opposing main surfaces of the separation wall through the channel of the received flow tube.

The term "flow tube set" refers to a set that comprises at least one flow tube.

In some embodiments, each of the receptions which is not receiving any flow tube is sealed, preferably by a cover, such that the fluid connection between the main flow inlet and the main flow outlet is given only by the fluid flow through the installed flow tube(s).

In some embodiments, receptions that do not receive a flow tube may be equipped with a flow sensor such as to function like a flow tube or said receptions may be sealed by a cover structure.

The terms "main flow inlet" and "main flow outlet" refer to openings through which the fluid may enter and exit, respectively, the flow chamber. In some embodiments, said main flow inlet and said main flow outlet are arranged on the same side of the flow chamber, preferably in the same wall of the housing, and in particular in a cover of the housing.

The term "flow tube" refers to a structure with a fluid inlet and a fluid outlet, wherein the fluid inlet and outlet are connected through a fluid channel for conveying a fluid flow from the fluid inlet to the fluid outlet. Accordingly, the flow tube must not necessarily have a tubular shape. A structure with a channel connecting a fluid inlet to a fluid outlet is also to be understood as a flow tube. The flow tube is configured to measure the flow therethrough. Preferably, the flow tube is equipped with a bypass channel which conveys a predefined part of the test flow, wherein the flow tube is configured to be provided with a flow sensor for measuring the flow through the bypass channel in order to determine the fluid flow through the flow tube. Other flow tube designs may be used.

Preferably, the flow tube is arranged in the flow chamber such that the main flow channel of the flow tube is substantially parallel to the flow direction of the fluid close to an upstream section or end of the flow tube. This ensures that the flow resistance is minimized. Accordingly, in some embodiments, the flow tube extends from its reception in the separation wall substantially in the upstream direction. It is therefore preferred, that each reception is configured to receive one flow tube such that said flow tube extends from the separation wall parallel to the upstream direction of the fluid flow.

The present invention is based on the insight that, for increasing an upper bound of a feasible measurement range of a flow measurement system with a specific flow tube, a plurality of such flow tubes may be combined. Optionally, additional flow channels may be arranged such as to shift the flow range. The present invention provides a structure for combining such a plurality of flow tubes or receptions that are equipable with flow sensors such as to increase said bound. This has the advantage, that a possible measurement range may be increased, for any design of flow tubes or flow sensors, without the need for designing new flow tubes or flow sensors. The modular design allows for a better use of existing flow tubes or flow sensors and increases a measurement range of the flow sensor device (*i.e.* the measurement system) without any change in the design of the flow tube.

The receptions in the separation wall of the housing comprise through-openings through the separation wall, such that a first main surface of the separation wall (on the main flow inlet side) and an opposing second main surface of the separation wall (on main flow outlet side) are fluidly connected to one another.

In some embodiments, at least one, a plurality, or preferably all of the receptions have a cross-sectional area of at least 1 cm², preferably of at least 2 cm², more preferably of at least 3 cm², more preferably of at least 5 cm², more preferably of at least 8 cm², more preferably of at least 10 cm².

Preferably, all said receptions have the same dimensions such that identical flow tubes may be fastened on or in each reception. This allows for an efficient production and use of the separation wall.

It is, however, also possible to combine different types of flow tubes. For that purpose, different types of receptions or receptions that are compatible with the different types of flow tubes may be arranged in the separation wall.

Preferably, the receptions in the separation wall are arranged in a homogenous pattern over the space that is available.

In a preferred embodiment, the separation wall is a plate with a plurality of through-openings as receptions.

In some embodiments, each reception comprises a fastening structure for fastening one flow tube each, the fastening structure preferably being a first part of a plug-in coupling, a threaded coupling, or a snap coupling. A further part of the coupling may then be provided on the flow tube for further securing the coupling (*cf.* below). Accordingly, inter-engagement between the two parts is possible. This makes possible a secure and quick installation and release of the flow tubes.

Preferably, the sealing structure (the cover or the lid) for sealing the receptions carrying no flow tube (or no flow sensor) is attachable to the separation wall by means of the same principle as the flow tubes are attachable to the separation wall, preferably by an identical structure such that the flow tubes and the sealing structure are attachable to the separation wall by means of the same first part of the coupling.

The above object is also achieved by a separation box according to claim 8.

In some embodiments, the separation wall forms part of a substantially fluid-tight separation box, wherein said separation box is arranged preferably completely within the flow chamber and defines a separation box chamber, wherein each of said receptions in said separation wall fluidly connects the flow chamber and the separation box chamber to one another, and wherein the separation box comprises a connection structure, the separation box chamber being fluidly connected with the main flow inlet or to the main flow outlet by means of said connection structure.

Accordingly, in some embodiments with a separation box, the separation wall is not simply dividing the flow chamber into two fluidly-separated sections but a further substantially fluid-tight box is placed in the housing, wherein the separation wall is part of the outer wall of said preferably essentially cuboidal separation box.

This modular design allows assembling the flow tube set elsewhere prior to inserting said flow tube set and sealing structures into the housing which may be advantageous over assembling in the housing itself.

It is, however, also possible that the separation box comprises additional flow channels as described above in context with the separation wall.

Accordingly, in a further aspect, the present invention provides a separation box for installation in a housing for measuring a fluid flow rate, the housing defining a substantially fluid-tight flow chamber and comprising a main fluid inlet for a fluid flow into the flow chamber, a main fluid outlet for the fluid flow out of the flow chamber. The separation box defines separation box chamber. The separation box may be substantially fluid-tight or it may comprise additional flow channels for substantial but controlled leakage as described above. The separation box comprises a separation wall with a plurality of receptions, wherein each reception is configured to receive at least one flow sensor or to receive a flow tube and each reception comprising at least one through-opening such that each through-opening or each flow tube fluidly connects the separation box chamber to the outside, and wherein the separation box comprises a connection structure, the connection structure being configured to fluidly connect the separation box chamber to the main flow inlet or to the main flow outlet of said housing.

The separation box is an enclosure that encloses the separation box chamber in a substantially fluid-tight manner. The separation box may be installed in a conventional housing. The separation box comprises an outer wall, *i. e.* the separation wall as discussed above, with a plurality of receptions for receiving a flow tube each. Again, the flow tubes may be detachably attachable to the separation wall, *i. e.* the box. The flow tubes received in the respective receptions fluidly connect the separation box chamber to the outside, *i. e.* the flow chamber of the housing, if the box is contained in said housing. The separation box comprises a connection structure for connection with the main flow outlet of the housing. Preferably, said connection structure is configured for detachable attachment. Moreover, the outside of the box may be provided with separator elements, e.g. springs or ribs or the like, wherein the separator elements position the box properly by contacting the inner walls of the housing.

The separation box may have a volume that is two, three, four, five, six or more times smaller than a volume of the flow chamber of the housing.

Accordingly, the separation box may be a device for upgrading existing housings. The separation box may simply be arranged within the chamber of the conventional housing, whereby the different configurations of providing the receptions with flow tubes or sealing structures are possible.

The above object is also solved by a flow sensor device, in particular a gas meter, with the features of claim 8. Accordingly, it is an aspect of the instant invention to provide a flow sensor device comprising a housing according to invention and at least one flow sensor or a flow tube received in one of the plurality of receptions, wherein any reception without flow tube, if any, is sealed in a fluid-tight manner. Thereby, the through-holes associated with receptions without a flow tube do not disturb the flow rate measurement.

In some embodiments, any reception without flow tube is sealed by means of a sealing structure, the sealing structure being preferably a cover or a lid. Said cover may be detachably attached to the separation wall as discussed above, wherein, in some embodiments, said cover may be a screw-on or -in lid or a snap-on or -in lid.

Each flow tube has an upstream and a downstream section or end. In some embodiments, the flow tubes are attached, with their downstream section, to the separation wall. In other embodiments, however, the flow tubes are attached, with their upstream section, to the separation wall. For example, the flow tubes may be arranged on the main fluid outlet side of the separation wall, or the flow tubes may be arranged in the separation box, while the latter is attached to the main flow outlet, or the main flow tube may be arranged on the outside of the separation box, while the latter is attached to the main flow inlet. In some embodiments, the flow tubes are arranged on both main surfaces of the separation wall.

In some embodiments, at least one or preferably all flow tubes are equipped, at their upstream end, with a substantially funnel-like shaped flow former. In some embodiments it is also possible to arrange such a flow former upstream of the reception, the latter not carrying a flow tube.

The term "funnel-like flow former" refers to a former whose cross-sectional flow area monotonically decreases in downstream direction. This flow former allows for an improved conveyance of fluid into the flow tube inlet. Thereby, a smooth and continuous movement of the fluid is achieved.

In a preferred embodiment a further part of the fastening structure, as described above, for fastening the flow tube to the separation wall is provided on each flow tube or each cover or lid. Accordingly, the further part of the fastening structure interacts with the first part of the fastening structure, the latter being provided on the separation wall, whereby a secure fastening of the flow tube, cover, or lid within the flow sensor device is possible. The first and/or further parts of the fastening structure may be a clamping structure, a threaded structure, or a snap-in or -on structure.

In some embodiments one, two, or more than two, preferably all the flow tubes of the flow sensor device in the housing are equipped with a flow sensor.

If, on the one hand, the more than one reception or flow tube is carrying a flow sensor, redundant data are available, which improves data quality. *E*.*g*., if one of the flow tubes gets contaminated with foreign bodies conveyed in the fluid flow, the flow gets restricted. This may be detectable by comparing the signals at least two flow tubes and by deducing from differences, if one of the flow tubes is partly or completely blocked. Moreover, a spatial flow variation may be deduced from the data if signals from several flow tubes are available. Also, the data may be averaged; thereby measurement accuracy may be improved.

If, on the other hand, only one flow tube is equipped with a flow sensor, all of the flow tubes without a flow sensor function as a blind bypass, the latter's conveying capacity being known. This saves costs. Accordingly, the device may be produced more cost efficiently while, additionally, being simpler to operate.

In some embodiments, at least one, preferably all the receptions comprise a diffusor element for diffusion of the conveyed fluid. This improves the conveyance of the fluid on a curved flow path. This is useful, for example, if the main flow outlet is arranged on the top side of the gas meter while the flow is conveyed along said top side and has to curve through the main flow outlet. In some embodiments, said diffusor element is arranged on the main flow outlet side of the separation wall, *e.g.* in the separation box chamber. In some embodiments, the diffusor element is arranged downstream from the flow sensor or flow tube. In some embodiments, the diffusor element is a hollow, rigid structure with through-holes in its walls, the through-holes having diameters ranging from 1 to 10 millimeters. Preferably, the diffusor is attached to or arranged at the downstream section of the flow tube or reception. Preferably, the diffusor has the shape of a hollow cylinder extending in the general direction of the flow tube.

The housing, separation box, and/or flow sensor device according to invention may be used for measuring a fluid flow rate.

The instant invention therefore also relates to a process or method of measuring a fluid flow, wherein, depending on the actual measurement requirements, in particular the size test fluid flow, an appropriate number of flow tubes of a suitable is installed in the corresponding receptions of the separation wall. If the number of receptions is larger than the appropriate number of flow tubes, the further receptions are sealed as described herein.

Accordingly, in a flow rate measurement method according to invention, the flow sensor device according to invention is provided, wherein, in a first step, the type of flow tube(s) and the number of flow tubes of each type is selected according to the fluid flow rate to be measured, the number and geometry of the receptions, the geometry of the flow chamber, and/or the geometry of the separation box chamber, if any. Then, in a further step, the fluid flow to be measured is guided into the main fluid inlet and the flow sensors are monitored by means of monitoring device(s).

A controller for the motoring device(s), the latter being computing device such as a micro controller or a personal computer may be configured to monitor one or all flow sensors at a time.

This method has the advantage that, with the same type(s) of flow tubes, a larger range, extended to higher flows, may be measured with a single type of flow tubes. There is no need for new flow tube designs.

It is appreciated that different types of existing flow tubes may be combined to the flow tube set to achieve a desired measurement flow range. Preferably, but not necessarily, at least one flow tube of each type is equipped with an appropriate flow sensor.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows in perspective view a housing for flow measurements according to the present invention;
- Fig. 2: shows the housing according to Fig. 1 with partly removed outer side wall, wherein a separation box within a flow chamber of the housing is visible;
- Fig. 3: shows, in a perspective view, the separation box according to Fig. 2;
- Fig. 4: shows a perspective view of a longitudinal section of a flow tube according to a further embodiment with a flow restrictor;
- Fig. 5: shows the flow tube according to Fig.4 in a side view; and
- Fig. 6: shows the flow tube according to Fig. 4 in a front view.

### DESCRIPTION OF PREFERRED EMBODIMENTS

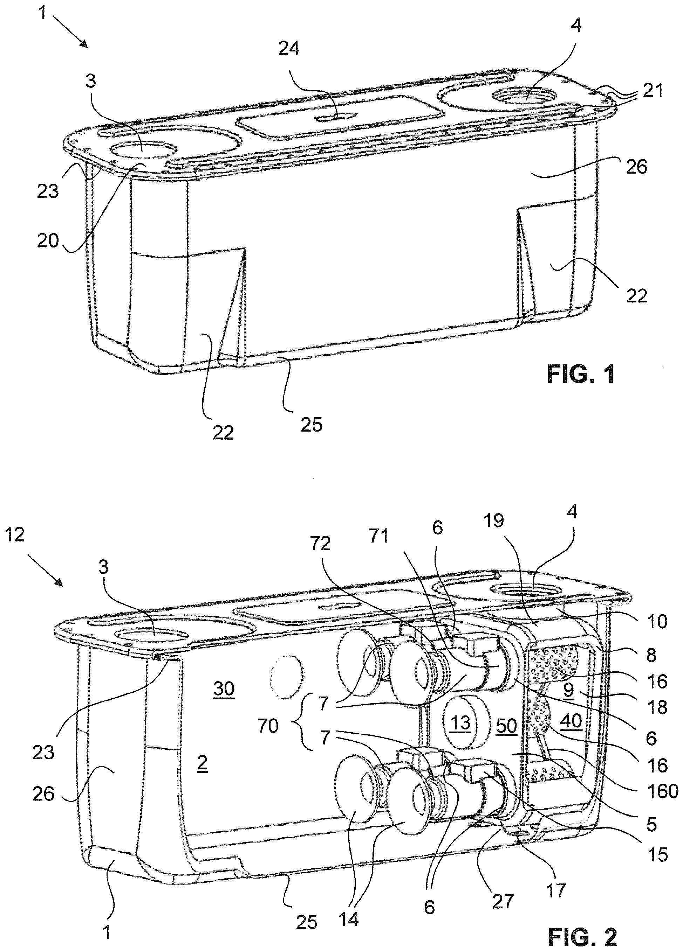

**Figure 1** shows a housing 1 of a gas meter, according to a preferred embodiment of the instant invention. The housing 1 is a box-like structure with rounded corners. It delimits a flow chamber 2 that is defined by a trough-shaped outer wall 26. The outer wall 26 includes a bottom plate 25. The housing 1 is sealed with a cover 20.

The outer wall 26 exhibits, at its corners, side recesses 22 in a lower half, *i.e.* close to the bottom plate 25 of the housing 1. At its upper rim, *i.e*. away from the bottom plate 25, the outer wall 26 has a circumferential flange 23 (*cf.* Fig. 2), which defines an opening of the trough. Said opening has a substantially oblong shape with four edges, *i.e.* long edges opposing one another and short edges opposing one another. Furthermore, said opening is sealed with the cover 20, the latter being substantially fluid-tightly screwed onto said flange 23 by means of a plurality of screw connections 21 that are arranged along the outer edge of the cover 20, *i. e.* along the short and long edges of wall 26. The cover 20 has, close to a short edge of said opening, a main flow inlet 3 and a main flow outlet 4 to the left and the right in Fig. 1, respectively. Said main flow inlet 3 and main flow outlet 4 are the entrance opening into and the exit opening out of said flow chamber 2 for a flow that is to be measured and therefore conveyed through said flow chamber 2. Except for said inlet 3 and outlet 4, the entire housing 1 is substantially fluid-tightly sealed.

In Fig. 1, the cover 20 is provided on its outer surface with an arrow 24 that indicates the direction of the fluid flow.

A typical length of a long edge of the opening may be 50 to 120 centimeters; a typical ratio of the length of the long edge to the length of the short edge of the opening may be in the range from 1.2 to 10. A height of the housing 1, *i.e.* a distance from the bottom plate 25 to the cover 20 may amount to 0.2 to 5 times the length of the short edge of said opening.

The outer wall 26 of the housing 1 may be made from plastics and/or a metal. It may be structured with enforcement patterns, such as rips or grooves.

**Figure 2** shows the housing 1 according to Fig. 1, wherein a part of the outer wall 26 has been omitted such that a view into the flow chamber 2 is possible. Within the flow chamber 2 there is arranged a separation box 8 with a flow tube set 70. The separation box 8 is a substantially fluid-tight, substantially cuboidal box with rounded edges that is four to ten times smaller in volume than the volume of the housing 1. The separation box 8 delimits a separation box chamber 9.

The separation box 8 comprises the separation wall 5, a back wall 18 and a box side wall 19. The back wall 18 is arranged substantially parallel to the separation wall 5 and has approximately the same size. The box side wall 19 fluid-tightly connects the separation wall 5 and the back wall 18 such that the separation wall 5 and the back wall 18 are arranged parallel to one another and at a distance of 1/10 to 1/4 of the distance between the bottom plate 25 and the cover 20.

Moreover, a connecting structure 10 for attaching the separation box 8 to the cover 20 is provided on the separation box 8. The connecting structure 10 is designed such that, once the connection between box 8 and cover 20 has been established, the separation box chamber 9 is fluidly connected to the main flow outlet 4 provided in the cover 20. Accordingly, the separation box chamber 9 is fluidly connected through the connecting structure 10 to an outside part of the flow chamber 2. From Fig. 2 it is apparent that the separation box 8 is entirely provided within said flow chamber 2 whilst being fluidly connected to the main flow outlet 4. The connecting structure 10 is provided on the top face of the box side wall 19 and is built as a pipe-like extension that runs from the separation box 8 to the cover 20. Within the connecting structure 10 a channel is provided for fluidly connecting the separation box chamber 9 to the main flow outlet 4. A typical diameter of said channel ranges from 25% to 60% or 75% of the short edge of the cover 20.

The separation box 8 is arranged in the flow chamber 2 such that it is shifted toward the short edge close to the main flow outlet 4. More generally, as the separation box 8 may be connected to the main fluid outlet 4, the separation box 8 is shifted towards the main fluid outlet 4.

The separation wall 5 comprises a first main surface 50 facing the main flow inlet 3 and an opposing second main surface, the main surfaces defining part of the separation box chamber 9. The separation wall 5 is arranged, within the flow chamber 2, such that the first main surface 50 substantially fills a cross-sectional area of the housing 1; gaps 27 with a gap width of 1 to 10 centimeters, are left open to the bottom and side wall 25, 26 (*cf.* Fig. 2). The separation wall 5 is arranged substantially transversely to the plate-like cover 20 and the first main surface 50 faces toward the main flow inlet 3. The separation wall 9 separates the flow chamber 2 into two parts, a main flow inlet side 30 on the one side of the wall 5and a main flow outlet side 40 on the other side of the wall 5.

The separation wall 5 comprises five receptions 6 which each provide a through-opening through the separation wall 5 from the first main surface 50 of the separation wall 5, the first main surface 50 being on the main flow inlet side 30, to the second main surface of the separation wall 5, the second main surface being on the main flow outlet side 40. Furthermore, the receptions 6 are configured to receive flow tubes 7 such that the flow tubes 7 fluidly connect the flow chamber 2 with the separation box chamber 9.

As can be seen from Fig. 2, the separation box 8 with flow tubes 7 is arranged on the right half of the housing 1, *i.e.* shifted towards the main fluid outlet 4.

A fluid path of the test flow runs from the outside of the housing 1 via the main fluid inlet 3 into the flow chamber 2 and through the flow tubes 7 into the separation box chamber 9 and from there through the connecting structure 10 via the main flow outlet 4 to the outside of the housing 1. The flow path is conveyed through the flow tube set 70 with the four flow tubes 7.

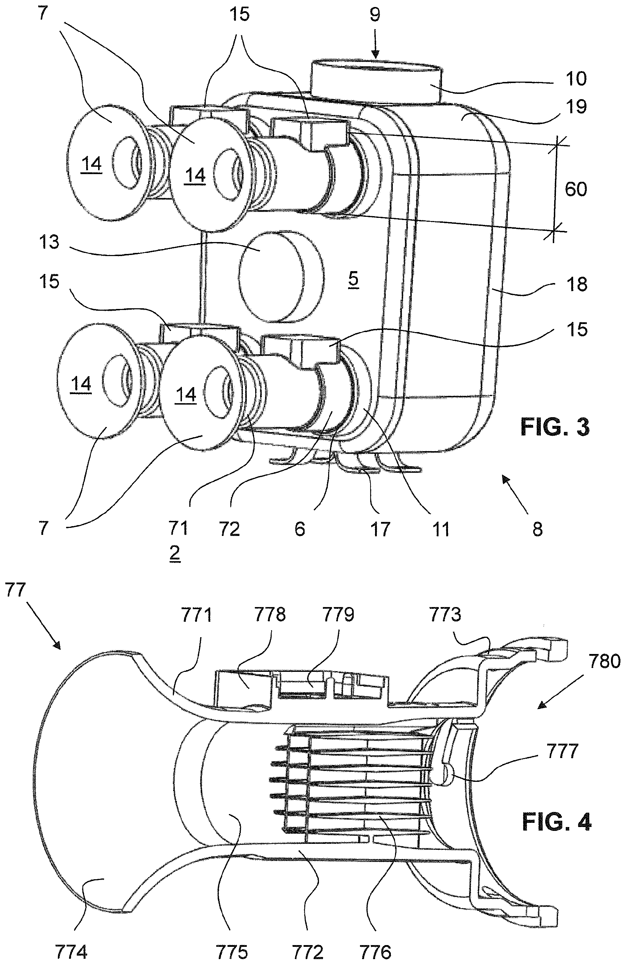

The flow tubes 7 are provided in the receptions 6 as can be seen from Figs. 2 and 3. The tubes 7 are detachably attached to the separation wall 5. Figure 2 shows four flow tubes 7 arranged in each corner of the separation wall 5, whereas a fifth reception 6, being provided in the middle between the four corner receptions 6 or flow tubes 7, is covered by a fluid-tight sealing structure 13.

The sealing structure 13 is a lid that is detachably attached to the separation wall 5 and configured for sealing the through-opening of the middle reception 6 in the separation wall 5. If necessary, the middle reception 6 may be equipped with a fifth flow tube (not shown) or one, two, or three of the corner receptions may be sealed with a sealing structure similar to sealing structure 13. It is therefore appreciated that, depending on the targeted test flow, a predefined number of flow tubes 7 (not necessarily four of them as in Fig. 2) are received in the available receptions 6 of the separation wall 5 (not necessarily five of them as in Fig. 2; there can be two, three, four, six, seven, eight, nine or more receptions) whilst the receptions 6 that are not carrying a flow tube 7 are each sealed by means of a lid like lid 13 according to Fig. 2.

The flow tubes 7 have a substantially cylindrical shape and protrude with their lengthwise direction from the first main surface 50 of separation wall 5 into the flow chamber 2 in the general direction of the main flow inlet 3.

Each flow tube 7 has, on its top side, a flow sensor box 15. The flow sensor box 15 is arranged next to the separation wall 5, outside the separation box chamber 9, and protrudes 1 to 3 centimeters toward the cover 20. The sensor box 15 has a substantially square cross-sectional shape with an edge length of about 50% to 80% of a diameter of a tube of the flow tube 7. Within said flow sensor box 15 a flow sensor may be arranged for measuring the fluid flow through the flow tube 7. At least one of the flow tubes 7 of the set 70 is equipped with at least one flow sensor in its flow sensor box 15. Accordingly, all the flow tubes 7 may be equipped with a flow sensor, only one of them or some of them. Equipping only one or some tubes 7 with a flow sensor is cost efficient, having several tubes 7 equipped with a flow sensor allows for redundancy and more precise rate measurements.

As can be seen from Fig. 2, each flow tube 7 comprises a downstream end or section 71 and an upstream end or section 72. Each flow tube 7 is received, with its downstream section 71, in one reception 6 and therein attached to the plate 5, Moreover, each flow tube 7 is provided, at its upstream section 72, with a flow former 14. The flow former 14 is a basically funnel-shaped object that is mounted to the upstream section 72 of the flow tube 7 and serves to guide the fluid flow into the flow tube 7. The funnel 14 decreases its cross-sectional area in downstream direction. Accordingly, the funnel 14 has a tapered shape. An upstream end of the funnel 14 has a diameter which is about 1.5 to 2 times the diameter of the tube of the flow tube 7.

Each flow tube 7 is detachably connected to the separation wall 5 in a fluid-tight manner by means or a fastening structure 11 provided on or in each reception 6.

The fastening structure 11 may be a cylindrical surface defining the through-opening into which the tube 7 may be pushed such that the tube 7 is received in the through-opening of the respective reception 6 in a force fit (plug-in coupling). Alternatively, portions of the tube 7 and possibly portions of the reception 6 may be threaded such that the tube 7 is engages into the reception 6 in a form fit, *i.e.* a threaded connection may be provided. Alternatively or additionally, a snap coupling may be provided.

Alternatively, the tube 7 may be pushed onto a flange which is provided around the through-opening of the reception 6 (also a plug-in coupling). Also here, a screw or snap coupling means may be used to additionally secure the connection.

Within the separation box chamber 9 each flow tube 7 leads its flow path at its downstream section 71 into a diffusor 16. The diffusor 16 is formed as a cylinder with its central axis coaxial with the central axis of the flow tube 7. The diffusor 16 receives the fluid exiting the flow tube 7 and has, on its cylinder walls and downstream bottom plate, a plurality of through-holes. These through-holes on its sides and bottom act such as to diffuse the fluid flow. The effect of the diffusor 16 is a more smooth flow of the fluid along the main flow path, the latter being curved in the region of the diffusor 16. Each flow tube 7 or each reception 6 may be provided with such a diffusor 16.

Accordingly, the diffusor 16 may be a portion of the downstream part of the tube 7 with a substantially equal diameter as the tube 7, wherein the diffusor 16 is pushed through the through-opening of the respective reception 6 into the box 8 when the tube 7 is mounted on the plate 5. Alternatively, the diffusor 16 may be arranged fixedly on the second main surface of the separation wall 5, *i. e.* in the box 8. The length of the diffusor 16 is chosen such that the diffusor 16 extends from the plate 5 and ends with a free end within the box 8.

Alternatively, the downstream end of the diffusor 16 may be part of the back wall 18, *i. e.* the diffusor bottom plate is part of the back wall 18 of box 8. The plurality of diffusors 16 according to this design may be connected to one another by means of webs 160 which are provided as ribs that extend along the inner surfaces (separation wall 5 and/or back wall 18) of the separation box wall(s) and connect nearest neighbours in a pairwise manner (*cf.* Fig. 2). This may provide increased stability.

**Figure 3** shows the separation box 8 with a flow tube set 70. The connecting structure 10 is visible that is provided on the upper face of the box side wall 19 and provides a fluid connection from separation box chamber 9 to the outside of the chamber 9.

The separation box 8 comprises a box support 17, which is formed by a plurality of protruding legs. The box support 17 is designed to fit into the gap 27 such as to support the separation box 8 against an inner surface of the bottom wall 25 and the side wall 26 of the housing 1. The box support 17 is arranged opposite of the connection structure 10.

**Figures 4** to **6** show a flow tube 77 according to a further embodiment. The flow tube 77 has an inlet or upstream section 771, an outlet or downstream section 773, and a central tube section 772 that connects the upstream and the downstream sections 771, 772 to one another. The three sections 771, 772, 773 are integrally formed as one-piece element. The upstream section 771 includes an upstream-facing funnel-like flow former 774. Once the flow tube 77 is mounted in a respective reception 6, the former 774 is a free end of the flow tube 77. The middle section 772 has the shape of a hollow cylinder with a main channel 775 that fluidly connects an upstream side and a downstream side of the flow tube 77. Within the main channel 775 there is arranged a flow restrictor 776. The flow restrictor 776 is preferably shaped such that the fluid flow being conveyed therethrough is conveyed in a laminar manner.

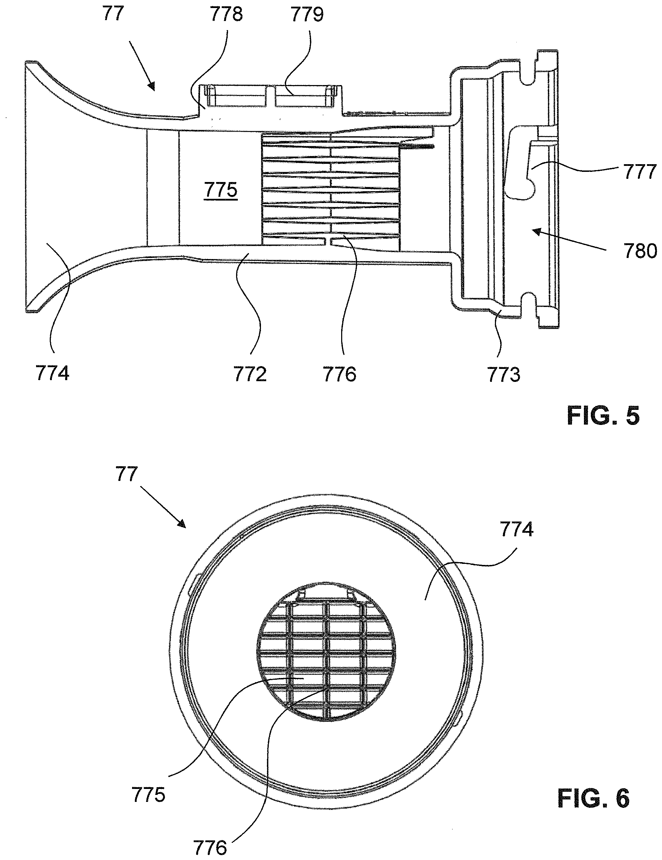

The restrictor 776 in this embodiment is a grid that extends over substantially the entire downstream half of the middle section 772. In cross-section (*cf.* Fig. 6) the through-openings of the grid are, in a cross-sectional view, substantially rectangular with a length of about 1/30 to 1/10 of a maximum outer funnel diameter and a height that is half of said length at their narrowest part. In flow direction, a material thickness of the grid walls increases from about 1/4 of the height of said rectangular through-opening to about 1/2 of said height. Accordingly, the flow restrictor 776 creates a plurality (*e.g*. 20) flow channels that have a substantially rectangular shape, wherein a cross section of the flow channels decreases to the middle of the flow restrictor in downstream direction and increases from there towards the downstream end. Other shapes or types of restrictors may be used.

The downstream section 773 comprises cylindrical reception 780 and a fastening structure 777 for fastening the flow tube 77 onto the reception 6 in the separation wall 5. The fastening structure 777 is preferably designed as a bayonet catch. Accordingly, the downstream section 773 may be pushed over a male part of the bayonet closure, the latter being provided on the separation wall 5. Other fastening structures may be used.

On an outside surface of the middle section 772 is provided the radially protruding flow sensor box 778 with the flow sensor chamber 779, the latter being adapted for receiving the flow sensor. The flow sensor box 778 is arranged in the upstream part of the middle section 772 and overlaps the restrictor 776.

In some embodiments according to invention, the flow sensor is directly mounted into the through-opening of the reception 6. This through-opening contains the main channel and may be provided, at its upstream end with a flow former as described above and/or with a flow restrictor as described above.

### LIST OF REFERENCE SIGNS

| | | | |
|---|---|---|---|
| 1 | housing | 780 | reception |
| 2 | flow chamber in 1 | 8 | separation box |
| 3 | main fluid inlet into 2 | 9 | separation box chamber in 8 |
| 30 | main fluid inlet side of 2 | 10 | connection structure |
| 4 | main fluid outlet out of 2 | 11 | fastening structure |
| 40 | main fluid outlet side of 2 | 12 | flow sensor device |
| 5 | separation wall | 13 | cover |
| 50 | first main surface of 5 | 14 | flow former |
| 6 | reception in 5 | 15 | flow sensor box |
| 7 | flow tube | 16 | diffusor element |
| 70 | flow tube set | 160 | web |
| 71 | downstream section of 7 | 17 | box support |
| 72 | upstream section of 7 | 18 | back wall of 8 |
| 77 | further flow tube | 19 | side wall of 8 |
| 771 | upstream section of 77 | 20 | cover of 1 |
| 772 | downstream section of 77 | 21 | screw in 1 |
| 773 | middle section of 77 | 22 | recess in 26 |
| 774 | funnel-like flow former | 23 | flange in 26 |
| 775 | main channel | 24 | arrow, flow direction |
| 776 | flow restrictor | 25 | bottom plate of 1 |
| 777 | fastening structure | 26 | side wall of 1 |
| 778 | Flow sensor box | 27 | gap |
| 779 | Flow sensor chamber | | |

## Claims

1. Housing (1) defining a substantially fluid-tight flow chamber (2), the flow chamber (2) being configured for measurement of a fluid flow rate, the housing (1) comprising:
a main fluid inlet (3) for a fluid flow into the flow chamber (2), a main fluid outlet (4) for the fluid flow out of the flow chamber (2), and a separation wall (5),
wherein the separation wall (5) is arranged in the flow chamber (2), the separation wall (5) separating a main fluid inlet side (30) from a main fluid outlet side (40),
wherein the separation wall (5) comprises a plurality of receptions (6), each reception (6) being configured to receive at least one flow sensor or a flow tube (7) with or without flow sensor, and each reception (6) comprising at least one through-opening such that each through-opening or each received flow tube (7) fluidly connects the main fluid inlet side (30) to the main fluid outlet side (40); and
wherein the separation wall (5) forms part of a substantially fluid-tight separation box (8), wherein said separation box (8) is arranged within the flow chamber (2) and defines a separation box chamber (9), wherein each of said receptions (6) in said separation wall (5) is configured to fluidly connect the flow chamber (2) to the separation box chamber (9), and wherein the separation box (8) comprises a connection structure (10) for fluidly connecting the separation box chamber (9) to the main flow outlet (4) or the main fluid inlet (3).

2. Housing (1) according to claim 1, wherein the separation wall (5) and each reception (6) therein are configured such that each through-opening or each received flow tube (7) fluidly connects the main fluid inlet side (30) to the main fluid outlet side (40) such that the fluid flow is conveyed substantially exclusively through the through-opening(s) or received flow tube(s) (7).

3. Housing (1) according to claim 1 or 2, wherein each reception (6) is configured to receive one flow tube (7), preferably such that said flow tube (7) extends from the separation wall (5) in an upstream or downstream direction of the fluid flow.

4. Housing (1) according to any one of claims 1 to 3, wherein all said receptions (6) have the same dimensions.

5. Housing (1) according to any one of the claims 1 to 4, wherein the separation wall (5) is a plate, and wherein each of the receptions (6) comprises one through-opening through said plate.

6. Housing (1) according to any one of the claims 1 to 5, wherein each reception (6) comprises a fastening structure (11) for each fastening one flow tube (7), the fastening structure (11) preferably being a first part of a plug-in coupling, a threaded coupling, and/or a snap coupling.

7. Separation box (8) for installation in a housing (1) according to any one of claims 1 to 6, the separation box (8) defining a separation box chamber (9),
wherein the separation box (8) comprises a separation wall (5) with a plurality of receptions (6), wherein each reception (6) is configured to receive at least one flow sensor or to receive a flow tube (7) and each reception (6) comprising at least one through-opening such that each through-opening or each flow tube (7) fluidly connects the separation box chamber (9) to the outside, and wherein the separation box (8) comprises a connection structure (10), the connection structure (10) being configured to fluidly connect the separation box chamber (9) to the main fluid inlet (3) or to the main fluid outlet (4) of said housing (1).

8. Flow sensor device (12), in particular a gas meter, comprising a housing (1) according to any one of the claims 1 to 6, wherein the flow sensor device (12) further comprises at least one flow sensor or a flow tube (7) received in one of the plurality of receptions (6).

9. Flow sensor device (12), in particular a gas meter, comprising a separation box (8) according to claim 7, wherein the flow sensor device (12) further comprises at least one flow sensor or a flow tube (7) received in one of the plurality of receptions (6).

10. Flow sensor device (12) according to claim 8 or 9, wherein each reception (6) either carries one flow sensor, one flow tube (7), or is sealed by means of a sealing structure (13), wherein, preferably, said sealing structure (13) is detachably attached to the separation wall (5), and wherein, preferably, said sealing structure (13) is a push-on lid, a push-in lid, a screw-on lid, a screw-in lid, a snap-on lid, or a snap-in lid.

11. Flow sensor device (12) according to claim 10, wherein each flow tube (7) has a downstream section (71) and an upstream section (71), wherein each flow tube (7) is attached with its downstream section (71) to the separation wall (5), and wherein at least one flow tube (7) is equipped, at its upstream section (72), with a funnel-like shaped flow former (14).

12. Flow sensor device (12) according to any one of the claims 8 to 11, wherein one, more than one, or all of the flow tubes (7) in the housing (1) are equipped with a flow sensor.

13. Flow sensor device (12) according to any one of the claims 8 to 12, wherein at least one or all the receptions (6), or at least one or all flow tubes (7) comprise a diffusor element (16), wherein said diffusor element (16) is at the downstream end of the reception (6) or at the downstream section (71) of the flow tube (7) received in one reception (6), and/or wherein, if the housing (1) comprises a separation box (8) according to claim 7, said diffusor element (16) is arranged within the separation box chamber (9).

14. Use of a housing (1) according to any one of claims 1 to 6, a separation box (8) according to claim 7, or of a flow sensor device (12) according to any one of the claims 8 to 13 for measuring the fluid flow.

## Patentansprüche

1. Gehäuse (1), das eine im Wesentlichen fluiddichte Strömungskammer (2) definiert, wobei die Strömungskammer (2) zur Messung einer Fluidströmungsgeschwindigkeit ausgebildet ist, wobei das Gehäuse (1) umfasst:
einen Hauptfluideinlass (3) für einen Fluidstrom in die Strömungskammer (2), einen Hauptfluidauslass (4) für den Fluidstrom aus der Strömungskammer (2) und eine Trennwand (5),
wobei die Trennwand (5) in der Strömungskammer (2) angeordnet ist, wobei die Trennwand (5) eine Hauptfluideinlassseite (30) von einer Hauptfluidauslassseite (40) trennt,
wobei die Trennwand (5) mehrere Aufnahmen (6) umfasst, wobei jede Aufnahme (6) so ausgebildet ist, dass sie mindestens einen Durchflusssensor oder ein Strömungsrohr (7) mit oder ohne Durchflusssensor aufnimmt und wobei jede Aufnahme (6) mindestens eine Durchgangsöffnung umfasst, sodass jede Durchgangsöffnung oder jedes aufgenommene Strömungsrohr (7) die Hauptfluideinlassseite (30) mit der Hauptfluidauslassseite (40) fluidisch verbindet; und
wobei die Trennwand (5) einen Teil eines im Wesentlichen fluiddichten Trennkastens (8) bildet, wobei der Trennkasten (8) innerhalb der Strömungskammer (2) angeordnet ist und eine Trennkastenkammer (9) definiert, wobei jede der Aufnahmen (6) in der Trennwand (5) so ausgebildet ist, um die Strömungskammer (2) mit der Trennkastenkammer (9) fluidisch zu verbinden, und wobei der Trennkasten (8) eine Verbindungsstruktur (10) zum fluidischen Verbinden der Trennkastenkammer (9) mit dem Hauptfluidauslass (4) oder dem Hauptfluideinlass (3) umfasst.

2. Gehäuse (1) nach Anspruch 1, wobei die Trennwand (5) und jede Aufnahme (6) darin so ausgebildet sind, dass jede Durchgangsöffnung bzw. jedes Strömungsrohr (7) die Hauptfluideinlassseite (30) mit der Hauptfluidauslassseite (40) fluidisch verbindet, sodass der Fluidstrom im Wesentlichen ausschliesslich durch die Durchgangsöffnung(en) oder das(die) empfangene(n) Strömungsrohr(e) (7) gefördert wird.

3. Gehäuse (1) nach Anspruch 1 oder 2, wobei jede Aufnahme (6) zur Aufnahme eines Strömungsrohres (7) ausgebildet ist, vorzugsweise derart, dass sich das Strömungsrohr (7) von der Trennwand (5) in der Stromaufwärts- oder Stromabwärtsrichtung des Fluidstroms erstreckt.

4. Gehäuse (1) nach einem der Ansprüche 1 bis 3, wobei alle genannten Aufnahmen (6) die gleichen Abmessungen aufweisen.

5. Gehäuse (1) nach einem der Ansprüche 1 bis 4, wobei die Trennwand (5) eine Platte ist und wobei jede der Aufnahmen (6) eine Durchgangsöffnung durch die Platte umfasst.

6. Gehäuse (1) nach einem der Ansprüche 1 bis 5, wobei jede Aufnahme (6) eine Befestigungsstruktur (11), um je ein Strömungsrohr (7) zu befestigen, umfasst, wobei die Befestigungsstruktur (11) vorzugsweise ein erster Teil einer Steckkupplung, einer Gewindekupplung und/oder einer Schnappkupplung ist.

7. Trennkasten (8) zum Einbau in ein Gehäuse (1) nach einem der Ansprüche 1 bis 6, wobei der Trennkasten (8) eine Trennkastenkammer (9) definiert, wobei der Trennkasten (8) eine Trennwand (5) mit mehreren Aufnahmen (6) aufweist, wobei jede Aufnahme (6) zum Aufnehmen mindestens eines Durchflusssensors oder zum Aufnehmen eines Strömungsrohres (7) ausgebildet ist und wobei jede Aufnahme (6) mindestens eine Durchgangsöffnung umfasst, sodass jede Durchgangsöffnung oder jedes Strömungsrohr (7) die Trennkastenkammer (9) nach aussen fluidisch verbindet, und wobei die Trennbox (8) eine Verbindungsstruktur (10) umfasst, wobei die Verbindungsstruktur (10) ausgebildet ist, um die Trennkastenkammer (9) mit dem Hauptfluideinlass (3) oder mit dem Hauptfluidauslass (4) des Gehäuses (1) fluidisch zu verbinden.

8. Durchflusssensorvorrichtung (12), insbesondere Gaszähler, mit einem Gehäuse (1) nach einem der Ansprüche 1 bis 6, wobei die Durchflusssensorvorrichtung (12) ferner mindestens einen Durchflusssensor oder ein Strömungsrohr (7) umfasst, der/das in einer der Vielzahl von Aufnahmen (6) aufgenommen ist.

9. Durchflusssensorvorrichtung (12), insbesondere Gaszähler, mit einem Trennkasten (8) nach Anspruch 7, wobei die Durchflusssensorvorrichtung (12) ferner mindestens einen Durchflusssensor oder ein zugelassenes Strömungsrohr (7) in einer der Vielzahl von Aufnahmen (6) umfasst.

10. Durchflusssensorvorrichtung (12) nach Anspruch 8 oder 9, wobei jede Aufnahme (6) entweder einen Durchflusssensor oder ein Strömungsrohr (7) trägt, oder mittels einer Dichtungsstruktur (13) abgedichtet ist, wobei, vorzugsweise, die besagte Dichtungsstruktur (13) lösbar an der Trennwand (5) befestigt ist, und wobei, vorzugsweise, die Dichtungsstruktur (13) ein Aufsteckdeckel, ein Einsteckdeckel, ein Aufschraubdeckel, ein Einschraubdeckel, ein Aufschnappdeckel oder Einschnappdeckel ist.

11. Durchflusssensorvorrichtung (12) nach Anspruch 10, wobei jedes Strömungsrohr (7) einen stromabwärtsliegenden Abschnitt (71) und einen stromaufwärtsliegenden Abschnitt (71) aufweist, wobei jedes Strömungsrohr (7) mit seinem stromabwärtsliegenden Abschnitt (71) an der Trennwand (5) befestigt ist, und wobei an ihrem stromaufwärtsliegenden Abschnitt (72) mindestens ein Strömungsrohr (7) mit einem trichterförmigen Flussformer (14) versehen ist.

12. Durchflusssensorvorrichtung (12) nach einem der Ansprüche 8 bis 11, wobei ein, mehr als ein oder alle der Strömungsrohre (7) im Gehäuse (1) mit einem Durchflusssensor ausgestattet sind.

13. Durchflusssensorvorrichtung (12) nach einem der Ansprüche 8 bis 12, wobei mindestens eine oder alle Aufnahmen (6) oder mindestens ein oder alle Strömungsrohre (7) ein Diffusorelement (16) aufweisen, wobei das Diffusorelement (16) am stromabwärtsliegenden Ende der Aufnahme (6) oder an dem in einer Aufnahme (6) aufgenommenen stromabwärtsliegenden Abschnitt (71) des Strömungsrohres (7) angeordnet ist, und/oder wobei das Gehäuse (16) einen Trennkasten (8) nach Anspruch 7 aufweist, wobei das Diffusorelement (16) innerhalb der Trennkastenkammer (9) angeordnet ist.

14. Verwendung eines Gehäuses (1) nach einem der Ansprüche 1 bis 6, eines Trennkasten (8) nach Anspruch 7 oder einer Durchflusssensorvorrichtung (12) nach einem der Ansprüche 8 bis 13 zum Messen der Fluidströmung.

## Revendications

1. Boîtier (1) définissant une chambre à écoulement (2) sensiblement étanche aux fluides, la chambre à écoulement (2) étant configurée pour la mesure d'un taux d'écoulement de fluide (2), le boîtier comprenant :
une entrée de fluide principale (3) pour un écoulement de fluide dans la chambre à écoulement (2), une sortie de fluide principale (4) pour l'écoulement de fluide hors de la chambre à écoulement (2), et une paroi de séparation (5),
dans lequel la paroi de séparation (5) est disposée dans la chambre de flux (2), la paroi de séparation (5) séparant un côté d'entrée de fluide principale (30) d'un côté de sortie de fluide principale (40),
dans lequel la paroi de séparation (5) comprend une pluralité de réceptions (6), chaque réception (6) étant configurée pour recevoir au moins un capteur d'écoulement ou un tube d'écoulement (7) avec ou sans capteur d'écoulement, et chaque réception (6) comprenant au moins une ouverture traversant de sorte que chaque ouverture traversant ou chaque tube d'écoulement reçu (7) raccorde de manière fluidique le côté d'entrée de fluide principale (3) au côté de sortie de fluide principale (40) ; et
dans lequel la paroi de séparation (5) forme une partie d'une boîte de séparation (8) sensiblement étanche aux fluides, dans lequel ladite boîte de séparation (8) est disposée dans la chambre à écoulement (2) et définit une chambre de boîte de séparation (9), dans lequel chacune desdites réceptions (6) dans ladite paroi de séparation (5) est configurée pour raccorder de manière fluidique la chambre à écoulement (2) à la chambre de boîte de séparation (9), et dans lequel la boîte de séparation (8) comprend une structure de raccord (10) pour raccorder de manière fluidique la chambre de boîte de séparation (9) à la sortie de fluide principale (4) ou l'entrée de fluide principale (3).

2. Le boîtier (1) selon la revendication 1, dans lequel la paroi de séparation (5) et chaque réception (6) dans celle-ci est configurée de sorte que chaque ouverture traversant ou chaque tube d'écoulement reçu (7) raccorde de manière fluidique le côte d'entrée de fluide principale (30) au côté de sortie de fluide principale (40) de sorte que l'écoulement de fluide est guidé sensiblement exclusivement à travers le(s) ouverture(s) traversant(es) ou le(s) tube(s) d'écoulement reçu(s) (7).

3. Le boîtier (1) selon la revendication 1 ou 2, dans lequel chaque réception (6) est configurée pour recevoir un tube d'écoulement (7), préférablement de sorte que ledit tube d'écoulement (7) s'étend depuis la paroi de séparation (5) dans une direction en amont ou en aval de l'écoulement de fluide.

4. Le boîtier (1) selon l'une quelconque des revendications 1 à 3, dans lequel toutes lesdites réceptions (6) ont les mêmes dimensions.

5. Le dispositif (1) selon l'une quelconque des revendications 1 à 4, dans lequel la paroi de séparation (5) est une plaque, et dans lequel chacune des réceptions (6) comprend une ouverture traversant à travers ladite plaque.

6. Le boîtier (1) selon l'une quelconque des revendications 1 à 5, dans lequel chaque réception (6) comprend une structure de fixation (11) pour fixer chaque tube d'écoulement (7), la structure de fixation (11) étant préférablement une première partie d'un raccordement enfichable, un raccordement fileté, et/ou un raccordement à enclenchement.

7. Boîte de séparation (8) pour l'installation dans un boîtier (1) selon l'une quelconque des revendications 1 à 6, la boîte de séparation (8) définissant une chambre de boîte de séparation (9),
dans lequel la boîte de séparation (8) comprend une paroi de séparation (5) avec une pluralité de réceptions (6), dans laquelle chaque réception (6) est configurée pour recevoir au moins un capteur d'écoulement ou pour recevoir un tube d'écoulement (7) et chaque réception (6) comprenant au moins une ouverture traversant de sorte que chaque ouverture traversant ou chaque tube d'écoulement (7) raccorde de manière fluidique la chambre de boîte de séparation (9) à l'extérieur, et dans laquelle la boîte de séparation (8) comprend une structure de raccord (10), la structure de raccord (10) étant configurée pour raccorder de manière fluidique la chambre de boîte de séparation (9) à l'entrée de fluide principale (3) ou à la sortie de fluide principale (4) dudit boîtier (1).

8. Dispositif de capteur d'écoulement (12), en particulier un compteur de gaz, comprenant un boîtier (1) selon l'une quelconque des revendications 1 à 6, dans lequel le dispositif de capteur d'écoulement (12) comprend en outre au moins un capteur d'écoulement ou un tube d'écoulement (7) reçu dans une de la pluralité de réceptions (6).

9. Le dispositif de capteur d'écoulement (12), en particulier un compteur de gaz, comprenant une boîte de séparation (8) selon la revendication 7, dans lequel le dispositif de capteur d'écoulement (12) comprend en outre au moins un capteur d'écoulement ou tube d'écoulement (7) reçu dans une de la pluralité de réceptions (6).

10. Le dispositif de capteur d'écoulement (12) selon la revendication 8 ou 9, dans lequel chaque réception (6) comporte un capteur d'écoulement, un tube d'écoulement (7), ou est scellé au moyen d'une structure de scellage (13), dans lequel, préférablement, ladite structure de scellage (13) est attachée de manière détachable à la paroi de séparation (5), et dans lequel, préférablement, ladite structure de scellage (13) est un couvercle supra-emboîtable, un couvercle intra-emboîtable, un couvercle supra-vissé, un couvercle intra-vissé, un couvercle à supra-enclenchement un couvercle à intra-enclenchement.

11. Le dispositif de capteur d'écoulement (12) selon la revendication 10, dans lequel chaque tube d'écoulement (7) a une section en aval (71) et une section en amont (71), dans lequel chaque tube d'écoulement (7) est attaché avec sa section en aval (71) à la paroi de séparation (5), et dans lequel au moins un tube d'écoulement (7) est équipé, au niveau de sa section en amont (72), avec un bec d'écoulement (14) en forme d'entonnoir.

12. Le dispositif de capteur d'écoulement (12) selon l'une quelconque des revendications 8 à 11, dans lequel un, plus qu'un, ou tous les tubes d'écoulement (7) dans le boîtier (1) sont équipés d'un capteur d'écoulement.

13. Le dispositif de capteur d'écoulement (12) selon l'une quelconque des revendications 8 à 12, dans lequel au moins une ou toutes les réceptions (6), ou au moins un ou tous les tubes d'écoulement (7) comprennent un élément diffuseur (16), dans lequel le dit élément diffuseur (16) est à l'extrémité en aval de la réception (6) ou à la section en aval (71) du tube d'écoulement (7) reçu dans une réception (6), et/ou dans lequel, si le boîtier (1) comprend une boîte de séparation (8) selon la revendication 7, ledit élément diffuseur (16) est disposé dans la chambre de boîte de séparation (9).

14. Utilisation d'un boîtier (1) selon l'une quelconque des revendications 1 à 6, une boîte de séparation (8) selon la revendication 7, ou d'un dispositif de capteur d'écoulement (12) selon l'une quelconque des revendications 8 à 13 pour la mesure de l'écoulement d'un fluide.
